# EUROPEAN PATENT APPLICATION

(11) **EP 4 768 344 A1**
(43) Date of publication of application: **01.07.2026**
(21) Application number: 25188371.6
(22) Date of filing: 09.07.2025
(51) Int. Cl.: B60R 16/023, B60R 16/03

(54) **POWER DISTRIBUTION UNIT AND VEHICLE**

(30) Priority: 26.12.2024 CN 202411946525; 08.02.2025 WO PCT/CN2025/076400
(71) Applicant: Eve Energy Co., Ltd., Huizhou, Guangdong 516006 (CN)
(72) Inventor: FENG, Shifan, Huizhou, Guangdong, 516006 (CN); XIANG, Yuanjiu, Huizhou, Guangdong, 516006 (CN); HUANG, Deqiang, Huizhou, Guangdong, 516006 (CN)
(74) Representative: Berggren Oy

(57) **Abstract**

Provided are a power distribution unit and a vehicle. The power distribution unit includes a housing (100), a BMS assembly (300), an overcurrent assembly (500), and a wiring harness assembly (700). The housing (100) includes a lid (110) and a bottom wall (130) disposed in a first direction, a first mounting cavity (120) and a second mounting cavity (140) disposed in the first direction being formed between the lid (110) and the bottom wall (130). The BMS assembly (300) is mounted in the first mounting cavity (120), where a wiring space is formed between the housing (100) and a side of the BMS assembly (300) in a second direction. The wiring harness assembly (700) passes through the wiring space to be connected to the BMS assembly (300) and the overcurrent assembly (500) separately.

## Description

### TECHNICAL FIELD

The present disclosure relates to the field of energy storage technologies, for example, a power distribution unit and a vehicle.

### BACKGROUND

There are numerous electrical systems and electronic devices in a vehicle, such as the engine control system, the lighting system, the infotainment system, and the safety system. A power distribution unit (PDU) of the vehicle may be responsible for reasonably distributing the power output from the vehicle's battery pack or generator to the various systems and devices to ensure that they obtain a stable supply of electrical energy. For example, the PDU is capable of providing a power pathway with a sufficient current for a high power-demanding starter motor, while supplying a stable low current for low-power sensors.

In the related art, a large number of electrical components in the power distribution unit are connected through a large number of wiring harnesses. These wiring harnesses are routed around the power distribution unit's box.

### SUMMARY

However, this setup makes for cumbersome and messy wiring that takes up a lot of space.

Some embodiments of the present disclosure provide a power distribution unit. The power distribution unit includes a housing, a BMS assembly, an overcurrent assembly, and a wiring harness assembly.

The housing includes a lid and a bottom wall disposed in a first direction, a first mounting cavity and a second mounting cavity being formed between the lid and the bottom wall, and the first mounting cavity and the second mounting cavity being disposed in the first direction.

The BMS assembly is mounted in the first mounting cavity, where a wiring space is formed between the housing and a side of the BMS assembly in a second direction, the second direction being perpendicular to the first direction, and the BMS assembly is configured to be electrically connected to a battery pack and an external electrical device separately.

The overcurrent assembly is mounted in the second mounting cavity, the overcurrent assembly including a battery-side module and a load-side module which are electrically connected to each other, the battery-side module being electrically connected to the battery pack, and the load-side module being electrically connected to the external electrical device.

The wiring harness assembly passes through the wiring space to be connected to the BMS assembly and the overcurrent assembly separately.

Some embodiments of the present disclosure also provide a vehicle. The vehicle includes the power distribution unit as described above.

For the power distribution unit in the present disclosure, the internal space of the housing is divided into two cavities disposed along the first direction, which are the first mounting cavity and the second mounting cavity. The BMS assembly and the overcurrent assembly are provided in the first mounting cavity and second mounting cavity which are distributed along the first direction, thus making full use of the space in the first direction of the power distribution unit, and making the wiring distance shorter and the power distribution unit more compact. The wiring harness assembly passes through the wiring space to be connected to the BMS assembly and the overcurrent assembly separately. In the first mounting cavity, the wiring of the wiring harness assembly is more centralized, and the wiring harness structure within the housing is neat and compact and occupies less space, which is convenient for operators to operate and organize.

For the vehicle including the power distribution unit as described above in the present disclosure, the internal structure of the power distribution unit is compact so that the power distribution unit can have a small volume.

### BRIEF DESCRIPTION OF THE DRAWINGS

FIG. 1 is a schematic perspective view of a power distribution unit provided by some practical embodiments of the present disclosure.
FIG. 2 is an exploded view of a first practical embodiment of the power distribution unit of FIG. 1.
FIG. 3 is an exploded view of a second practical embodiment of the power distribution unit of FIG. 1.
FIG. 4 is a cross-sectional view of the power distribution unit of FIG. 1.
FIG. 5 is a partially enlarged view of region A of FIG. 4.
FIG. 6 is a partially enlarged view of region B of FIG. 4.
FIG. 7 is a partially enlarged view of region C of FIG. 4.
FIG. 8 is a partially enlarged view of region D of FIG. 4.

The reference signs are as follows.
100, housing; 110, lid; 130, bottom wall; 120, first mounting cavity; 140, second mounting cavity; 150, wiring space; 160, first sidewall; 170, second sidewall; 180, cross beam; 190, partition; 101, third sidewall; 103, fourth sidewall; 104, first chamber; 181, first portion; 182, second portion; 183, third portion; 184, first side; 185, second side;
200, first connector; 210, first connection terminal; 230, second connection terminal;
300, BMS assembly; 305, fastener; 301, BMS; 303, BMS bracket;
400, second connector;
500, overcurrent assembly; 501, relay; 503, TBOX; 504, busbar; 505, through-hole; 510, battery-side module; 530, load-side module;
600, insulating post; 601, slot; 603, first mating portion;
700, wiring harness assembly;
810, mount; 811, support portion; 812, second chamber; 813, second mating portion; 820, locking member; and
900, Hall sensor.

### DETAILED DESCRIPTION

There are numerous electrical systems and electronic devices in a vehicle, such as the engine control system, the lighting system, the infotainment system, and the safety system. A power distribution unit (abbreviated as PDU) of the vehicle may be responsible for reasonably distributing the power output from the vehicle's battery pack to the various systems and devices (e.g., the electric motor, the air-conditioning compressor, and the charging system) to ensure that they obtain a stable supply of electrical energy. For example, the PDU is capable of providing a power pathway with a sufficient current for the high power-demanding starter motor, while supplying a stable low current for low-power sensors. In an emergency, the PDU may also quickly cut off the power supply to ensure the safety of occupants. The power distribution unit may further communicate with the vehicle's control system (e.g., the battery management system (BMS)) to share data such as power usage and fault information. The power distribution unit may further include a controller area network (CAN) or other forms of data bus interfaces to communicate with other vehicle systems. In an electric vehicle, PDU is usually located between the high-voltage battery and some main load, acting as a bridge to ensure that power is delivered safely and efficiently to wherever it is needed.

In the related art, a large number of electrical components in the power distribution unit are connected through a large number of wiring harnesses. These wiring harnesses are routed around the power distribution unit's box, resulting in complex and cluttered wiring that occupies significant space.

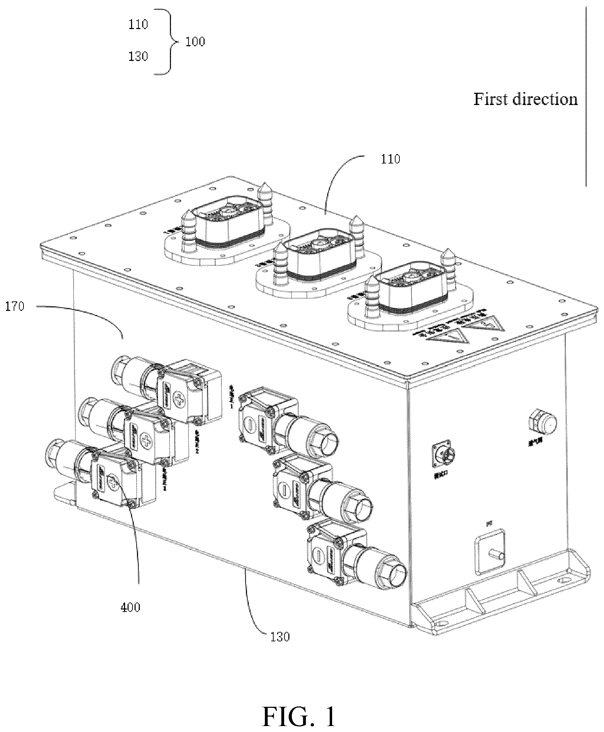

To overcome at least some of the above deficiencies, in a first aspect, some embodiments of the present disclosure provide a power distribution unit. Please referring to FIG. 1, the power distribution unit includes a housing 100, and other components are provided within the housing 100, such as a BMS assembly and an overcurrent assembly.

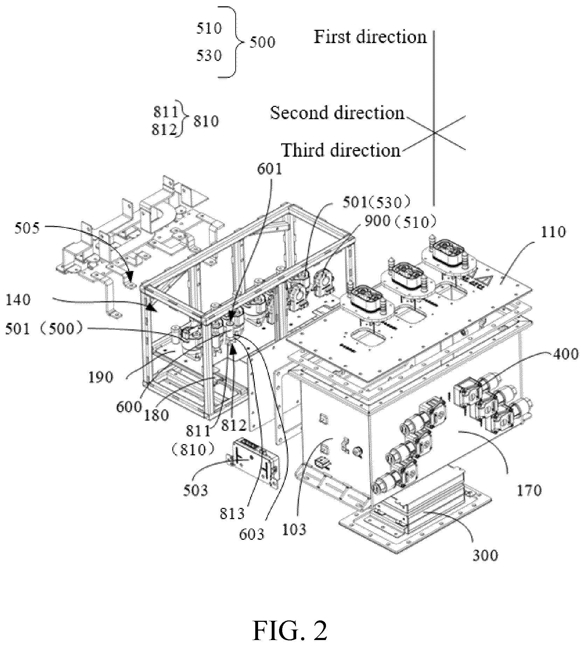

Please referring to FIG. 2, in some embodiments, the power distribution unit further includes a BMS assembly 300 and an overcurrent assembly 500, and the overcurrent assembly 500 may be electrically connected to an external electrical device. The BMS assembly 300 is electrically connected to a battery pack, and is primarily capable of monitoring and managing the operating state of the battery pack. The BMS assembly 300 is electrically connected to the external electrical device, and is capable of communicating with the external electrical device. In some examples, when the external electrical device includes another BMS, the BMS assembly 300 is capable of communicating with the BMS in the external electrical device. In some examples, the BMS assembly is capable of providing real-time power output capability information of the battery pack to the power distribution unit based on driving demands (e.g., different operating conditions such as acceleration, deceleration, and cruising) of the vehicle with this battery pack. The overcurrent assembly 500 optimizes the distribution of power from the battery pack to the external electrical device.

In some embodiments, the power distribution unit is electrically connected to the battery pack in a vehicle. The external electrical device may be various electrical systems of the vehicle, such as a drive motor, an air-conditioning system, and an on-board electronic device. As such, the power distribution unit performs rational distribution of power from the battery pack to the external electrical devices.

In some embodiments, the power distribution unit may act as a slave power distribution unit, and the power distribution unit may be electrically connected to the battery pack in the vehicle. The external electrical device may act as a master power distribution unit, and a BMS is provided in this master power distribution unit. The power distribution unit is electrically connected to the master power distribution unit, and the BMS assembly 300 communicates with the BMS in the master power distribution unit to interact with the BMS in the master power distribution unit by exchanging information. The master power distribution unit is connected to various systems and devices in the vehicle, whereby power output from the battery pack can be rationally distributed to the various systems and devices in the vehicle, such as the drive motor, the air-conditioning system, and the on-board electronic device.

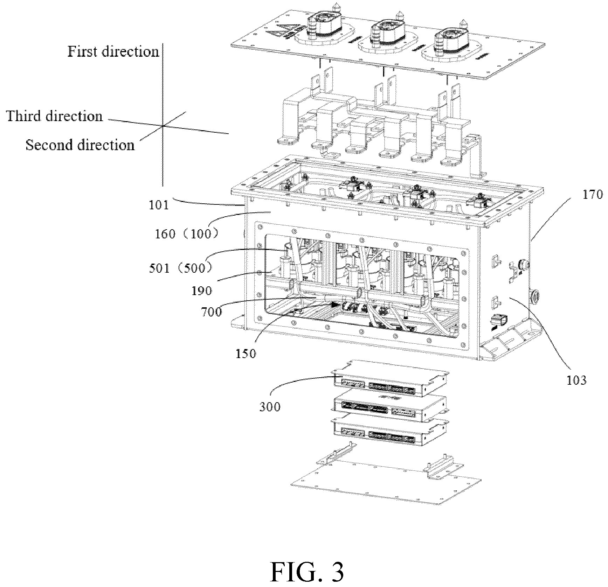

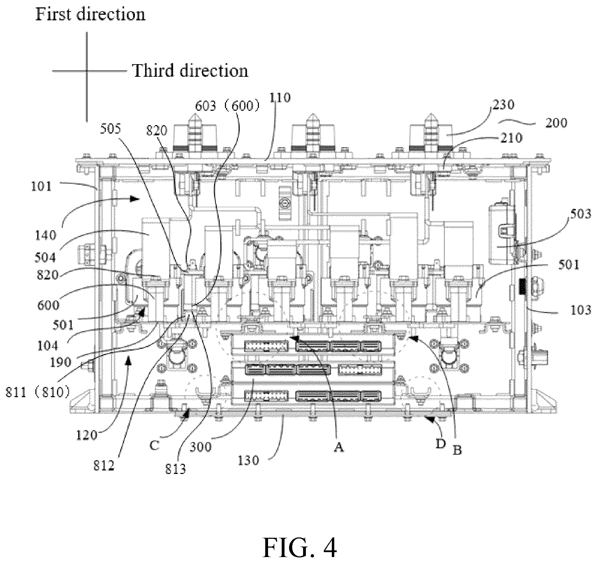

Please referring to FIG. 4, the housing 100 may include a lid 110 and a bottom wall 130 disposed in a first direction, a first mounting cavity 120 and a second mounting cavity 140 being formed between the lid 110 and the bottom wall 130, and the first mounting cavity 120 and the second mounting cavity 140 being disposed in the first direction. With reference to FIG. 3, the BMS assembly 300 may be mounted in the first mounting cavity 120, and the overcurrent assembly 500 may be mounted in the second mounting cavity 140, thereby layering the overcurrent assembly 500 and the BMS assembly 300 along the first direction in the housing 100.

The overcurrent assembly 500 is configured to be electrically connected to the battery pack and the external electrical device separately. The overcurrent assembly 500 may include a battery-side module 510 and a load-side module 530 electrically connected to each other, the battery-side module 510 being configured to be electrically connected to the battery pack, and the load-side module 530 being configured to be electrically connected to the external electrical device. In some examples, the battery-side module 510 may include a Hall sensor 900, and the load-side module 530 may include a relay 501, and the relay 501 may include a positive relay and a negative relay.

In some examples, the battery pack may include a positive electrode interface and a negative electrode interface, the positive electrode interface of the battery pack being electrically connected to the positive relay. The power distribution unit may further include a battery swapping connector, the positive relay being electrically connected to the battery swapping connector. The negative electrode interface of the battery pack is electrically connected to the Hall sensor and the negative relay in sequence, and the negative relay is electrically connected to the battery swapping connector. The positive and negative relays can control the on-off of a high voltage circuit. The positive and negative relays can turn the current on or off as desired by the system, thereby protecting the circuit from overloads or short circuits.

The Hall sensor, which can also be called a Hall Effect sensor, is primarily capable of performing current detection. The Hall effect sensor is a current measurement tool, and its principle is based on the Hall effect-when a current passes through a conductor, a magnetic field will be produced around the conductor; when a semiconductor material (such as a Hall component) is placed in the magnetic field and then excited by the current whose direction is perpendicular to the direction of the magnetic field, a voltage will be produced in the direction perpendicular to the directions of the current and the magnetic field, and this phenomenon is the Hall effect. The Hall sensor is capable of detecting the current passing through the PDU in real time, monitoring the charging and discharging status of the battery, calculating the state of charge (SOC) of the battery, performing fault diagnosis, etc. When an abnormal current (e.g., an overcurrent, short-circuit) has been detected, the Hall sensor may provide rapid feedback to the control system, and the control system then can take appropriate protective measures, such as cutting off the power supply to prevent damage to the battery pack or other electrical components.

In conjunction with FIG. 3, a wiring space 150 may be formed between a side of the BMS assembly 300 and a corresponding wall of the housing 100 along a second direction, the second direction being perpendicular to the first direction. In conjunction with FIG. 3, the power distribution unit further includes a wiring harness assembly 700, one end of the wiring harness assembly 700 being connected to the overcurrent assembly 500, and the other end of the wiring harness assembly 700 being connected to the BMS assembly 300 by passing through the wiring space 150. In other words, the wiring harness assembly 700 passes through the wiring space, and is thus connected to the BMS assembly 300 and the overcurrent assembly 500 separately.

FIG. 3 illustrates three directions of the power distribution unit, specifically including the first direction, the second direction, and a third direction. The first direction may also be referred to as a height direction of the power distribution unit, the second direction may also be referred to as a width direction of the power distribution unit, and the third direction may also be referred to as a length direction of the power distribution unit.

In the related art, the power distribution unit usually has a large number of electrical components arranged on one same layer, which occupy large space in the length direction and the width direction, thus making the space in the second direction (width direction) and the third direction (length direction) of the power distribution unit relatively crowded, and the space in the first direction (height direction) of the power distribution unit is not fully utilized. In these schemes, the electrical components are located far apart from one end to the other, and the distance of the wiring between the electrical components is long, thus making it difficult for operators to operate.

In some embodiments of the present disclosure, the internal space of the housing 100 is divided into two cavities disposed along the first direction (height direction), which are the first mounting cavity 120 and the second mounting cavity 140. The BMS assembly 300 and the overcurrent assembly 500 are provided in the first mounting cavity 120 and second mounting cavity 140 respectively which are distributed along the first direction, thus making full use of the space in the height direction of the power distribution unit, and making the wiring distance shorter and the power distribution unit more compact. In addition, in the embodiments of the present disclosure, the wiring harness assembly 700 passes through the wiring space, and is thus connected to the BMS assembly 300 and the overcurrent assembly 500 separately. In the first mounting cavity 120, the wiring of the wiring harness assembly is more centralized, and the structure is neat and compact and occupies less space, which is convenient for operators to operate and organize.

Please referring to FIG. 4, in some embodiments, the second mounting cavity 140 is disposed adjacent to the lid 110, and the overcurrent assembly 500 is mounted in the second mounting cavity 140, which means that the overcurrent assembly 500 is disposed adjacent to the lid 110. The power distribution unit further includes a first connector 200 mounted to the lid 110, the first connector 200 may be connected to an external electrical device and the overcurrent assembly 500, and the overcurrent assembly 500 is connected to the external electrical device via the first connector 200. The first connector 200 may include a first connection terminal 210 and a second connection terminal 230 which are connected to each other. The first connection terminal 210 is disposed in the second mounting cavity 140 and is electrically connected to the overcurrent assembly 500. The second connection terminal 230 is disposed on a side of the lid 110 facing away from the bottom wall 130 to facilitate the connection to the external electrical device. The first connection terminal 210 and the second connection terminal 230 may be integrally molded. The first connection terminal 210 and the second connection terminal 230 may be connected by screwing, riveting, or the like.

In these embodiments, the overcurrent assembly 500 is mounted in the second mounting cavity 140 and disposed closer to a side of the first connector 200, thereby reducing the connection distance between the overcurrent assembly 500 and the first connector 200, and making the internal structure of the power distribution unit more compact.

In some embodiments, the housing 100 further includes a first sidewall 160 and a second sidewall 170 disposed in the second direction (width direction). Please referring to FIG. 2, the housing 100 further includes a cross beam 180 and a partition 190 disposed between the lid 110 and the bottom wall 130, and the cross beam 180 can reinforce the power distribution unit, and can support as well as install the partition 190. Two opposite ends of the cross beam 180 may be fixed to the first sidewall 160 and the second sidewall 170 respectively, the partition 190 is fixed to a side of the cross beam 180 closer to the lid 110, the partition 190 and the lid 110 form the second mounting cavity 140, and the overcurrent assembly 500 is mounted on a side of the partition 190 facing towards the lid 110. In these embodiments, the cross beam 180 and the partition 190 are utilized, and the overcurrent assembly 500 may be mounted on the partition 190, and therefore the structures are more neatly organized and easy to be installed. The cross beam 180 can reinforce the housing 100, support the partition 190 and the overcurrent assembly 500, and make the structure of the housing 100 more stable.

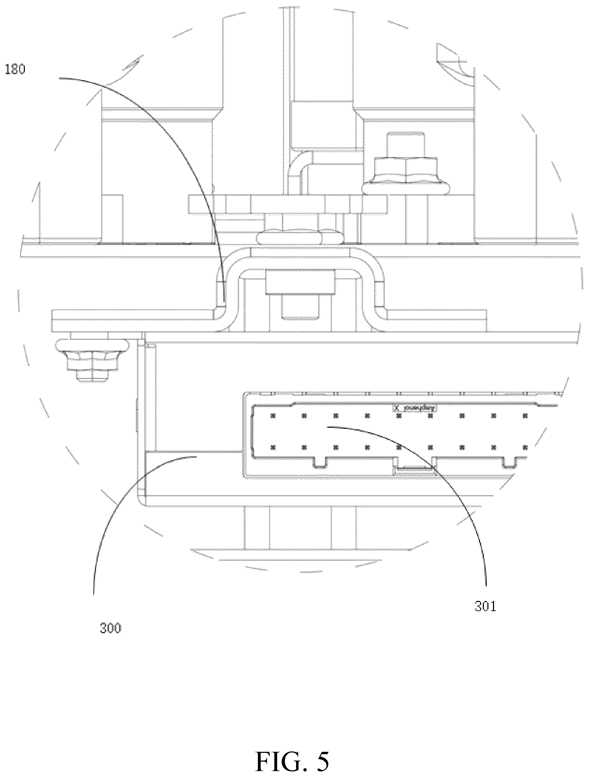

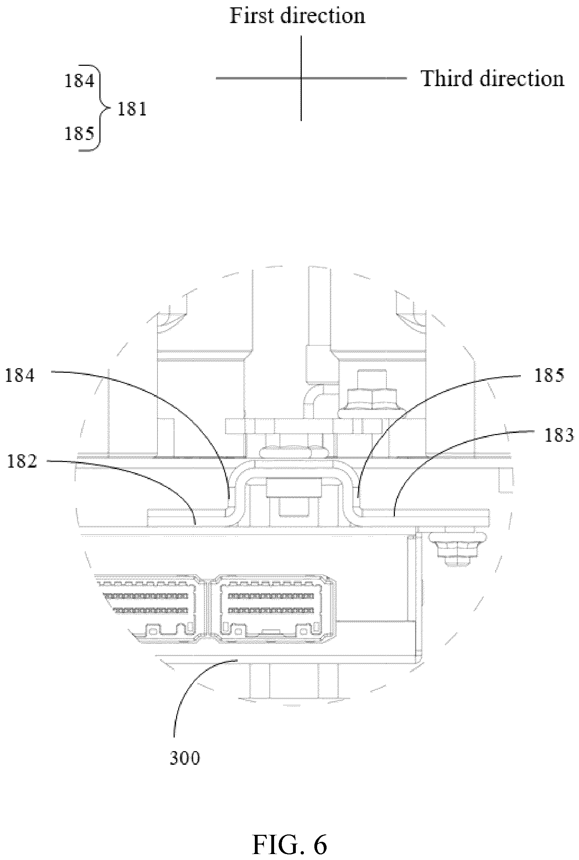

In some embodiments, please referring to FIGS. 5 and 6, the cross beam 180 may include a first portion 181, a second portion 182, and a third portion 183. Along the third direction, the first portion 181 may include a first side 184 and a second side 185 parallel to each other, the second portion 182 is bent and connected to the first side 184, and the third portion 183 is bent and connected to the second side 185. When the BMS assembly 300 is to be mounted, the third portion 183 may be connected to the BMS assembly 300, and the third portion 183 may be screwed, riveted or otherwise connected to the BMS assembly 300. The second portion 182 may be connected to the BMS assembly 300, and the second portion 182 may be screwed, riveted or otherwise connected to the BMS assembly 300. Thereby, the BMS assembly 300 can be stably fixed to the cross beam 180. A spacing exists between the first portion 181 and the BMS assembly 300 in the first direction, and the spacing between the first portion 181 and the BMS assembly 300 can be used as a reserved mounting space.

In some embodiments, in conjunction with FIG. 4, the BMS assembly 300 may also be connected to the bottom wall 130, thereby enabling securing the BMS assembly 300 to the first mounting cavity 120 in the first direction.

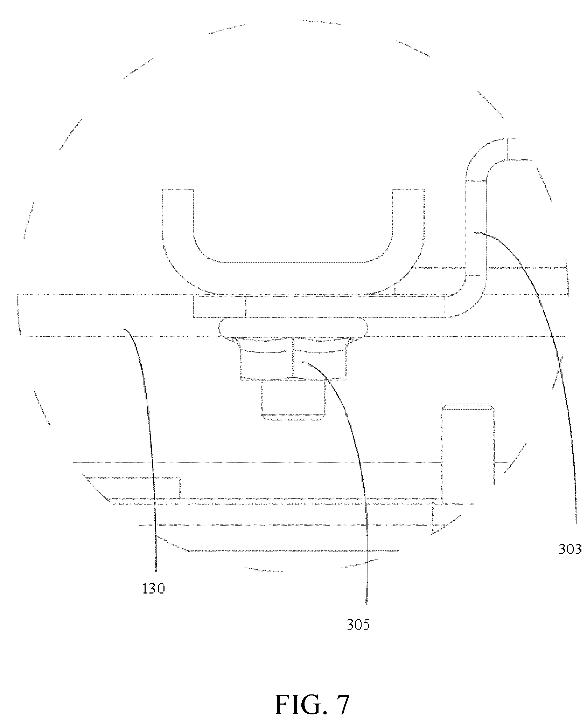

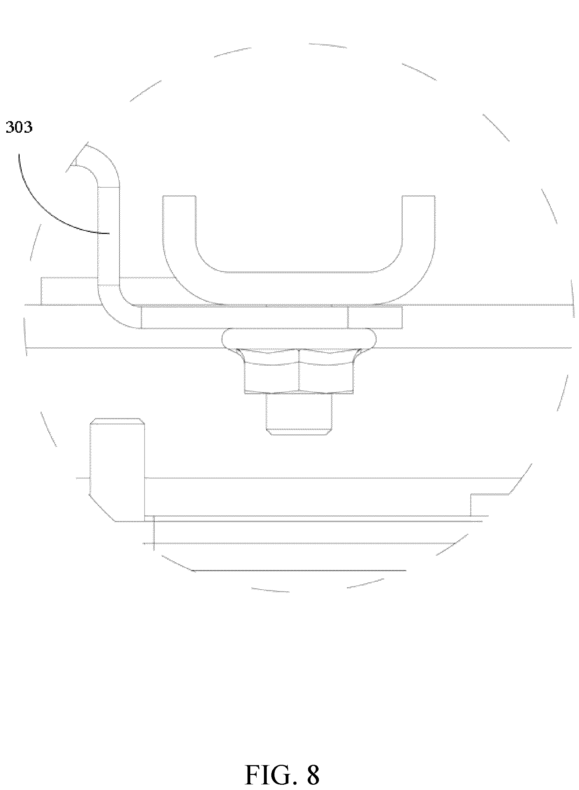

Please referring to FIG. 7 and FIG. 8, in some embodiments, the BMS assembly 300 may include a BMS 301 and a BMS bracket 303, where the number of the BMS(s) may be one or multiple, for example, the number of the BMSs may be three.

In some embodiments, the BMS bracket 303 is connected to the bottom wall 130 via a fastener 305. The BMS bracket 303 may be screwed, riveted, welded or otherwise connected to the bottom wall 130. In some embodiments, the fastener 305 may be a bolt.

Please referring to FIGS. 5, 6, 7, and 8, in some embodiments, the BMS assembly 300 is mounted on a side of the partition 190 facing away from the lid 110. The BMS assembly 300 may be removably connected to the partition 190, such as through screwing, snap-fitting, or the like. This can make the spacing between the BMS assembly 300 and the partition 190 smaller, thereby making the overall structure of the power distribution unit more compact.

Please referring to FIGS. 5, 6, 7, and 8, in some embodiments, the BMS assembly 300 may be mounted on a side of the cross beam 180 facing away from the lid 110, and the BMS assembly 300 is fixedly connected to the cross beam 180. The cross beam 180 has a relatively great strength and can carry the weight of the BMS assembly 300 without being easily damaged. Please referring to FIGS. 5, 6, 7, and 8, in some embodiments, a side portion of the BMS assembly 300 may be connected to a mounting member, and the side portion of the BMS assembly 300 may be connected to the side of the cross beam 180 facing away from the lid 110 by the mounting member.

Please referring to FIGS. 3 and 4, in some embodiments, the housing 100 further includes a third sidewall 101 and a fourth sidewall 103 disposed along the third direction, the third direction being perpendicular to the first direction, and the third direction being perpendicular to the second direction. The partition 190 extends along the third direction. The overcurrent assembly 500 includes multiple relays 501 and a telematics box (TBOX) 503 which is electrically connected to the BMS assembly 300. The relays 501 are spaced apart along the third direction on the partition 190, and the relays 501 are disposed in the extension direction of the partition 190, so that the relays 501 can have a large heat dissipation space between them to facilitate effective heat dissipation. The TBOX 503 is provided on the fourth sidewall 103 and is spaced apart from the relays 501. In these embodiments, the relays 501 are spaced apart on the partition 190 in the third direction, and the TBOX 503 is disposed on the fourth sidewall 103, which can fully utilize the space in the second mounting cavity 140 to obtain a compact structure.

The TBOX collects data from each electronic control unit (ECU) of the vehicle, such as motor running status, vehicle speed, fault codes, etc. The TBOX integrates and packages these data and sends them to the vehicle manufacturer's back-end servers or other relevant remote service platforms over a network (e.g., 4G/5G network). At the same time, the TBOX also receives commands from a remote end, such as remote start of the vehicle, unlocking the vehicle's door, etc., and forwards these commands to the corresponding ECU in the vehicle for execution.

Please referring to FIG. 4, in some embodiments, at least a portion of the TBOX 503 may be disposed above the relays 501, where the term "above the relays 501" refers to a side of the relays 501 closer to the lid 110, and there exists a certain space above the relays 501 and between the relays 501 and the lid 110.The TBOX 503 is provided on the fourth sidewall 103, and the TBOX 503 is disposed in the space above the relays 501 and between the relays 501 and the lid 110, which can more fully utilize the space within the second mounting cavity 140.

Please referring to FIGS. 2 and 4, in some embodiments, the power distribution unit further includes a second connector 400 and an insulating post 600, and the power distribution unit is connected to the battery pack via the second connector 400. The second connector 400 is mounted to the second sidewall 170, and at least a portion of the second connector 400 is disposed outside the housing 100 to facilitate connection to the battery pack.

The overcurrent assembly 500 further includes a busbar 504, the busbar 504 may include a copper busbar, an aluminum busbar, etc., and the relays 501 and other components of the overcurrent assembly 500 are connected to the first connector 200 via the busbar 504.

One end of the busbar 504 is connected to a side of a corresponding one of the relays 501 facing away from the partition 190, thereby a large spacing can be resulted between the busbar 504 and the partition 190 for heat dissipation, and the structure is compact. At least a portion of the busbar 504 and the partition 190 form a first chamber 104. Another end of the busbar 504 is connected to the second connector 400, the insulating post 600 is mounted in the first chamber 104, and two opposite ends of the insulating post 600 are connected to the partition 190 and the busbar 504, respectively. In these embodiments, the support of the busbar 504 by the insulating post 600 makes it less likely that the busbar 504 will exert a large pressure on the relays 501, while retaining a large heat dissipation gap (e.g., the first chamber 104, etc.), which is conducive to heat dissipation of the overcurrent assembly 500. The insulating post 600 enables electrical insulation, stops undesired conduction of current between different circuits, and prevents short-circuiting between the circuits.

In some embodiments, a first mating portion 603 is provided at an end of the insulating post 600 closer to the partition 190. The power distribution unit further includes a mount 810 in mating connection with the first mating portion 603, the mount 810 being fixed to the side of the partition 190 facing towards the lid 110. In these embodiments, the partition 190 may be provided with the mount 810 to form a connection between the mount 810 and the insulating post 600, thereby facilitating positioning of the insulating post 600 and facilitating operators to install the insulating post 600 on the relevant position of the partition 190.

Please referring to FIG. 2, the mount 810 includes a support portion 811 and a second mating portion 813. The support portion 811 is provided with a second chamber 812. The second mating portion 813 is mounted on a side of the support portion 811 facing away from the partition 190, the second mating portion 813 is in mating connection with the first mating portion 603 to form a connection between the insulating post 600 and the partition 190, and the second chamber 812 is between the second mating portion 813 and the partition 190.

The second mating portion 813 of the mount 810 on the partition 190 is in mating connection with the first mating portion 603 of the insulating post 600, allowing the insulating post 600 to be better mounted on the partition 190. In some embodiments, the first mating portion 603 of the insulating post 600 may be a concave portion, the second mating portion 813 of the mount 810 may be a convex portion, and the concave portion engages with the convex portion to form the connection between the insulating post 600 and the mount 810. In some embodiments, the first mating portion 603 of the insulating post 600 may be a convex portion, the second mating portion 813 of the mount 810 may be a concave portion, and the convex portion engages with the concave portion to form the connection between the insulating post 600 and the mount 810. In these embodiments, better heat dissipation is facilitated by providing the second chamber 812 between the second mating portion 813 and the partition 190.

Please referring to FIG. 4, in some embodiments, a slot 601 may be provided at an end of the insulating post 600 closer to the lid 110. The busbar 504 is provided with a through-hole 505. The power distribution unit further includes a locking member 820, and the locking member 820 sequentially extends through the through-hole 505 and the slot 601 to tightly fasten the insulating post 600 to the busbar 504. As such, it is convenient to connect the insulating post 600 to the busbar 504 by providing the slot 601 at the end of the insulating post 600 closer to the lid 110.

In some embodiments, the power distribution unit may further include the Hall sensor 900, the Hall sensor 900 being electrically connected to the corresponding relay 501, and the Hall sensor 900 being electrically connected to the battery pack. The Hall sensor 900 is provided between the second connector 400 and the corresponding relay 501.

The Hall sensor uses the principle of magnetic field induction to detect current without requiring a direct electrical connection to the circuit under detection. The Hall sensor can be easily installed around the busbar in the vehicle's power distribution unit. When a current passes through the busbar, a magnetic field is generated around it, and the Hall sensor is able to sense changes in the strength of this magnetic field and thus derive the magnitude of the current. This non-intrusive measurement method is not likely to interfere with the normal operation of the circuit or cause additional impact on the electrical structure inside the PDU. The Hall sensor 900 may also provide important current information to the BMS assembly, and the BMS assembly can use this information to control the charging and discharging processes of the battery pack, for example, to prevent the battery pack from being over-charged or over-discharged, ensuring that the battery pack operates in a safe and efficient manner, and prolonging the service life of the battery pack.

Regarding the power distribution unit provided by the embodiments of the present disclosure, the overcurrent assembly 500 and the BMS assembly 300 are disposed within the housing 100 in different layers along the first direction, thereby effectively utilizing the space in the length direction, the width direction, and the height direction of the power distribution unit, and making the overall structure of the power distribution unit more compact.

In a second aspect, some embodiments of the present disclosure further provide a vehicle including the power distribution unit as described above.

In the embodiments of the present disclosure, the internal space of the housing 100 is divided into two cavities disposed along the first direction, which are the first mounting cavity 120 and the second mounting cavity 140. The BMS assembly 300 and the overcurrent assembly 500 are provided in the first mounting cavity 120 and second mounting cavity 140 respectively which are distributed along the first direction, thus making full use of the space in the height direction of the power distribution unit, and making the wiring distance shorter and the power distribution unit more compact. In addition, in the embodiments of the present disclosure, one end of the wiring harness assembly 700 is connected to the overcurrent assembly 500, and the other end of the wiring harness assembly 700 is connected to the BMS assembly 300 through the wiring space 150 located on the side of the BMS assembly 300. In the first mounting cavity 120, the wiring of the wiring harness assembly is more centralized, and the structure is neat and compact and occupies less space, which is convenient for operators to operate and organize.

In the embodiments of the present disclosure, the internal structure of the power distribution unit is compact, so that the power distribution unit can have a small volume. The length direction of the power distribution unit may be set corresponding to a length direction of the vehicle, the width direction of the power distribution unit may be set corresponding to a width direction of the vehicle, and the height direction of the power distribution unit may be set corresponding to a height direction of the vehicle. The power distribution unit can take up a smaller amount of space in the length direction of the vehicle as well as in the width direction of the vehicle, and can fully utilize the space in the height direction of the vehicle.

In some embodiments, the power distribution unit in some embodiments of the present disclosure may act as a slave power distribution unit of the vehicle, and the vehicle may further include a master power distribution unit. As such, the vehicle supports battery swapping.

The power distribution unit (slave power distribution unit) in the embodiments of the present disclosure can cooperate with the master power distribution unit. The slave power distribution unit is directly connected to the battery pack, and may be set inside the battery pack or outside the battery pack, to record and manage the current, the voltage, and the like of the battery pack. When the battery is being swapped, the power distribution unit (slave power distribution unit) in the embodiments of the present disclosure and the battery pack can be replaced at the same time. In some embodiments, the vehicle allows battery swapping from the bottom.

In some embodiments, the accuracy of the connection between the battery and the vehicle's electrical system is verified through the cooperation between the slave power distribution unit and the master power distribution unit during battery swapping. If there is a loose connection, poor contact, etc., the slave power distribution unit or the master power distribution unit may detect abnormal circuit parameters, and warn the user or maintenance personnel via the vehicle's warning system.

In some embodiments, the power distribution unit (slave power distribution unit) in the embodiments of the present disclosure may be a power distribution unit with three-branch battery swapping capability, and the first connector 200 may be a battery swapping connector.

## Claims

1. A power distribution unit, **characterized by** comprising:
a housing (100) comprising a lid (110) and a bottom wall (130) disposed in a first direction, a first mounting cavity (120) and a second mounting cavity (140) being formed between the lid (110) and the bottom wall (130), and the first mounting cavity (120) and the second mounting cavity (140) being disposed in the first direction;
a BMS assembly (300) mounted in the first mounting cavity (120), wherein a wiring space (150) is formed between the housing (100) and a side of the BMS assembly (300) in a second direction, the second direction being perpendicular to the first direction, and the BMS assembly (300) is configured to be electrically connected to a battery pack and an external electrical device separately;
an overcurrent assembly (500) mounted in the second mounting cavity (140), the overcurrent assembly (500) comprising a battery-side module (510) and a load-side module (530) which are electrically connected to each other, the battery-side module (510) being configured to be electrically connected to the battery pack, and the load-side module (530) being configured to be electrically connected to the external electrical device; and
a wiring harness assembly (700) configured to pass through the wiring space (150) and to be connected to the BMS assembly (300) and the overcurrent assembly (500) separately.

2. The power distribution unit according to claim 1, wherein the second mounting cavity (140) is provided adjacent to the lid (110); the power distribution unit further comprises a first connector (200) mounted to the lid (110), the first connector (200) comprises a first connection terminal (210) and a second connection terminal (230), the first connection terminal (210) is disposed in the second mounting cavity (140) and is electrically connected to the overcurrent assembly (500), and the second connection terminal (230) is disposed on a side of the lid (110) facing away from the bottom wall (130) and is configured to be connected to the external electrical device.

3. The power distribution unit according to claim 1, wherein the housing (100) further comprises a first sidewall (160) and a second sidewall (170) disposed along the second direction; and
the housing (100) further comprises a cross beam (180) and a partition (190) which are disposed between the lid (110) and the bottom wall (130), two opposite ends of the cross beam (180) being fixed to the first sidewall (160) and the second sidewall (170) respectively, and the partition (190) being fixed to a side of the cross beam (180) closer to the lid (110); the partition (190) and the lid (110) form the second mounting cavity (140); and the overcurrent assembly (500) is mounted on a side of the partition (190) facing towards the lid (110).

4. The power distribution unit according to claim 3, wherein the BMS assembly (300) is mounted on a side of the cross beam (180) facing away from the lid (110), and the BMS assembly (300) is fixedly connected to the cross beam (180).

5. The power distribution unit according to claim 3, wherein the housing (100) further comprises a third sidewall (101) and a fourth sidewall (103) disposed along a third direction, the third direction being perpendicular to the first direction, and the third direction being perpendicular to the second direction;
the partition (190) extends along the third direction; and
the overcurrent assembly (500) comprises a plurality of relays (501) and a TBOX (503) which is electrically connected to the BMS assembly (300), the plurality of relays (501) being spaced apart along the third direction on the partition (190), and the TBOX (503) is disposed on the fourth sidewall (103) and spaced apart from the plurality of relays (501).

6. The power distribution unit according to claim 5, further comprising a second connector (400) and an insulating post (600);
wherein the second connector (400) is mounted to the second sidewall (170), and at least a portion of the second connector (400) is disposed outside the housing (100) and is configured to be connected to the battery pack;
the overcurrent assembly (500) further comprises a busbar (504), one end of the busbar (504) is connected to a side of a corresponding one of the plurality of relays (501) facing away from the partition (190), at least a portion of the busbar (504) and the partition (190) form a first chamber (104), and another end of the busbar (504) is connected to the second connector (400); and
the insulating post (600) is mounted in the first chamber (104), and two opposite ends of the insulating post (600) are connected to the partition (190) and the busbar (504), respectively.

7. The power distribution unit according to claim 6, wherein a first mating portion (603) is provided at an end of the insulating post (600) closer to the partition (190); the power distribution unit further comprises a mount (810) in mating connection with the first mating portion (603), and the mount (810) is fixed to the side of the partition (190) facing towards the lid (110).

8. The power distribution unit according to claim 7, wherein the mount (810) comprises a support portion (811) and a second mating portion (813), the support portion (811) is provided with a second chamber (812), the second mating portion (813) is mounted on a side of the support portion (811) facing away from the partition (190), and the second mating portion (813) is in mating connection with the first mating portion (603) to form a connection between the insulating post (600) and the partition (190); and the second chamber (812) is between the second mating portion (813) and the partition (190).

9. The power distribution unit according to claim 8, wherein the first mating portion (603) is a concave portion, the second mating portion (813) is a convex portion, and the concave portion engages with the convex portion to form the connection between the insulating post (600) and the partition (190);or the first mating portion (603) is a convex portion, the second mating portion (813) is a concave portion, and the convex portion engages with the concave portion to form the connection between the insulating post (600) and the partition (190).

10. The power distribution unit according to claim 6, wherein a slot (601) is provided at an end of the insulating post (600) closer to the lid (110) of the two opposite ends of the insulating post (600); the busbar (504) is provided with a through-hole (505); and the power distribution unit further comprises a locking member (820), the locking member (820) sequentially extends through the through-hole (505) and the slot (601) to tightly fasten the insulating post (600) to the busbar (504).

11. The power distribution unit according to any one of claims 6 to 10, further comprising a Hall sensor (900); the Hall sensor (900) is electrically connected to the corresponding relay (501), the Hall sensor (900) is configured to be electrically connected to the battery pack, and the Hall sensor (900) is provided between the second connector (400) and the corresponding relay (501).

12. The power distribution unit according to claim 1, wherein the BMS assembly (300) comprises a BMS (301) and a BMS bracket (303), and the BMS bracket (303) is connected to the bottom wall (130) via a fastener (305).

13. A vehicle, **characterized by** comprising the power distribution unit according to any one of claims 1 to 12.

14. The vehicle according to claim 13, further comprising a battery pack and an external electrical device.

15. The vehicle according to claim 13, wherein the power distribution unit is configured to act as a slave power distribution unit when the vehicle further comprises a master power distribution unit.
